# FASCICULE DE BREVET EUROPEEN

(11) **EP 2 258 821 B1**
(45) Date de publication et mention de la délivrance du brevet: **16.08.2017**
(21) Numéro de dépôt: 10290287.1
(22) Date de dépôt: 03.06.2010
(51) Int. Cl.: C12C 1/02, C12C 1/13

(54) **DISPOSITIF ET PROCÉDÉ DE TREMPAGE**
WEICHVORRICHTUNG UND -VERFAHREN
STEEPING DEVICE AND METHOD

(30) Priorité: 04.06.2009 FR 0902694
(43) Date de publication de la demande: 08.12.2010
(73) Titulaire: Malteurop Groupe, 51100 Reims (FR)
(72) Inventeur: Julien, Denis, 51360 Beaumont sur Vesle (FR)
(74) Mandataire: de Kernier, Gabriel

(56) Documents cités:
- DD-A1- 80 873
- GB-A- 1 583 148
- GB-A- 2 405 075
- GB-A- 190 106 441
- DATABASE WPI Week 197747 Thomson Scientific, London, GB; AN 1977-84251Y XP002573342, & SU 539 068 A1 (STARCH PRODUCTS RES) 26 janvier 1977 (1977-01-26)
- DATABASE WPI Week 198328 Thomson Scientific, London, GB; AN 1983-710605 XP002573343, & SU 956 556 A1 (BEER NON-ALCOHOLIC) 7 septembre 1982 (1982-09-07)
- DATABASE WPI Week 198651 Thomson Scientific, London, GB; AN 1986-337692 XP002573344, & SU 1 227 659 A1 (SOFT DRINK-BEER IND) 30 avril 1986 (1986-04-30)

## Description

L'invention concerne le domaine technique du maltage. Plus particulièrement l'invention se rapporte à un dispositif de trempage.

Lors du maltage il s'agit de reproduire le développement naturel de germination d'une céréale, afin que celle-ci synthétise certains enzymes, comme par exemple l'amylase. Comme céréale on utilise généralement de l'orge, ou encore du seigle, du blé ou de l'épeautre.

Le maltage comprend le traitement de la céréale par une succession d'opérations (notamment : trempage - germination - touraillage - dégermage), après quoi on obtient du malt. Il existe de gros besoins en malt de différentes propriétés et qualités selon son domaine d'application. Le brassage par exemple fait partie de ces domaines d'application et nécessite un malt adapté et conditionné pour la fabrication de la bière. Les principes généraux du maltage sont quasi ancestraux. On en trouve une synthèse dans l'ouvrage *"*Malterie et Brasserie", de Jean SUNIER, 2ème édition, imprimerie La Concorde, Lausanne, 1968, ou encore dans sa réédition plus récente sous le nouveau titre "La Fabrication de la Bière", Alliage éditeur, 26 septembre 2007, ISBN-13 No. 978-2921327602.

Aujourd'hui, le maltage est industriel, et réalisé dans des installations appelées malteries. L'un des buts d'une malterie est de mettre en place une installation automatisée qui procure un bon rendement en termes qualitatifs, tout en cherchant à réduire les nombreux coûts d'investissement et de fonctionnement de cette industrie: génie civil de construction, emprise de terrain, besoins en énergie, notamment.

Le document EP 0 546 910 B1 décrit une installation de malterie qui vise notamment des moyens de liaison amovibles pour plateau perforé tout en conservant un nettoyage amélioré de l'installation. GB 1 583 148 décrit un dispositif comprenant une chambre de germination (1) comprenant un lit (3) avec une dalle perforée (5) sur laquelle sont placés les grains. L'alimentation en oxygène est réalisée par un conduit (9) débouchant directement dans la chambre de germination. Le document GB 2 405 075 décrit un procédé pour trempage d'orge et son dispositif.

Le document SU 539 068 décrit une cuve pour tremper uniformément une mixture eau-graines.

De façon générale, une installation de malterie comporte au moins les éléments suivantes :
- un outil de trempage pour une opération de trempage,
- au moins un germoir pour une opération de germination,
- au moins une touraille pour une opération de touraillage, et
- un système de transport de l'un à l'autre, dans l'ordre.

Chacun de ces éléments est lié à des conditions opératoires strictes. En effet, les exigences de températures, de temps d'exposition et d'hygiène sont considérables et nécessitent une veille constante les différents éléments d'une malterie afin d'assurer une production de malt optimisée. De plus, les malteries doivent s'efforcer de réunir les conditions et besoins requis par l'industrie alimentaire, notamment pour assurer une bonne production de malt qui répond aux besoins de consommation.

La présente invention vient améliorer la situation.

À cet effet, l'invention vient introduire une installation de trempage pour malterie comprenant une cuve pour contenir une suspension céréale/eau et un seul tube disposé à l'intérieur de ladite cuve avec une extrémité inférieure et une extrémité supérieure toutes deux en communication avec la cuve. L'installation comprend un injecteur relié fluidiquement avec l'intérieur dudit tube, et collaborant avec l'extrémité inférieure dudit tube pour entraîner une circulation contrôlée de ladite suspension céréale/eau par injection d'un fluide gazeux, dans laquelle l'injecteur comprend une partie terminale d'injection formée par une chemise dynamique entourant ledit tube, et dans laquelle la chemise dynamique entoure de manière étanche ledit tube au voisinage de ladite extrémité inférieure, et en ce que au moins un stabilisateur est fixé à une paroi latérale de la cuve et à une paroi annulaire du tube.

Selon un mode de réalisation l'injecteur est agencé au voisinage de ladite extrémité inférieure du tube pour générer à l'intérieur du tube une première circulation contrôlée selon une direction allant de l'extrémité inférieure vers l'extrémité supérieure dudit tube.

Selon un autre mode de réalisation un chapeau de retenue formant déflecteur est placé au dessus de ladite extrémité supérieure pour rediriger ladite circulation contrôlée vers ladite cuve.

Le chapeau de retenue peut comprendre une forme générale en parapluie avec une partie inférieure concave et une partie supérieure conique.

Ladite partie inférieure concave peut comprendre un élément conique, dont la base est disposée sensiblement au centre de la partie inférieure concave et dont la pointe est agencée sensiblement sur l'axe central dudit tube.

Selon un mode de réalisation la cuve comprend une paroi latérale et un fond et dans laquelle un angle de déflection formé au moins partiellement par ladite partie concave dudit chapeau est agencé pour diriger ladite circulation contrôlée dans une direction prédéterminée vers la paroi latérale générant ainsi dans la cuve une circulation selon une symétrie de révolution par rapport à l'axe centrale dudit tube.

Selon l'invention l'injecteur comprend une partie terminale d'injection formé par une chemise dynamique entourant ledit tube.

La chemise dynamique entoure de manière étanche ledit tube au voisinage de ladite extrémité inférieure.

La chemise dynamique peut être réalisée selon une forme cylindrique dont la base comprend un plan incliné d'environ 45° par rapport à un axe transversal du tube.

Selon un mode de réalisation la chemise dynamique et le tube ont sensiblement le même axe central longitudinal.

Ledit tube peut comprendre au moins une fenêtre dans sa paroi annulaire au niveau de la partie de tube entourée par ladite chemise dynamique.

Chaque fenêtre peut être disposée circonférentiellement régulièrement sur ladite paroi annulaire.

Chaque fenêtre peut comprendre une grille.

Selon un mode de réalisation l'injecteur peut comprendre un tube d'aération comprimée, le tube d'aération comprimée étant relié en amont à une source de gaz sous pression.

Selon un mode de réalisation la cuve comprend une partie supérieure sensiblement cylindrique et une partie inférieure sensiblement tronconique.

Selon l'invention, au moins un stabilisateur est fixé à la paroi de la cuve et au tube pour assurer le maintient dudit tube.

Selon un mode de réalisation la cuve est munie d'ouvertures d'aération de gaz ménagées dans sa paroi pour l'alimentation en oxygène du mélange céréale/eau.

Selon un mode de réalisation le tube est disposé sensiblement au centre de la cuve.

Selon un mode de réalisation le tube comprend une extrémité supérieure divergente et une extrémité inférieure convergente. En outre, l'invention vient introduire un procédé de trempage pour la production de malt dans l'installation de l'invention, comprenant les étapes suivantes :
a. placer une céréale dans la cuve de l' installation,
b. submerger ladite céréale par de l'eau pour former un mélange eau/céréale,
c. injecter un flux gazeux à l'intérieur de la cuve,
d. générer une circulation contrôlée du mélange eau/céréale au moyen du flux gazeux injecté à l'étape c.,
e. maintenir la circulation contrôlée du mélange eau/céréale pendant une durée prédéterminée,
f. vidanger la cuve du mélange eau/céréale issu de la submersion à l'étape a., et
g. séparer le mélange eau/céréale pour récolter une céréale imbibée d'eau.

Selon un mode de réalisation l'étape a. et l'étape b. sont réalisées sensiblement simultanément.
Selon un autre mode de réalisation l'étape f. et l'étape g sont réalisées sensiblement simultanément.

Selon un autre mode de réalisation la circulation contrôlée suit une symétrie de révolution par rapport à l'axe central longitudinal de la cuve.
D'autres avantages et caractéristiques de l'invention apparaîtront à la lecture de la description détaillée ci-après et sur les dessins annexés sur lesquels :
- la figure 1 représente une vue frontale d'une coupe longitudinale de l'installation de trempage selon un mode de réalisation de l'invention,
- la figure 2 représente une vue frontale schématique partielle d'une coupe longitudinale de l'installation de trempage de la figure 1,
- la figure 3 représente une vue schématique partielle de dessus de l'installation de trempage de la figure 2,
- la figure 4 représente une vue frontale schématique d'une chemise dynamique de l'invention, et
- la figure 5 montre un organigramme d'un procédé de trempage de l'invention.

Les dessins et la description ci-après contiennent, pour l'essentiel, des éléments de caractère certain. Ils font partie intégrante de la description, et pourront donc non seulement servir à mieux faire comprendre la présente invention, mais aussi contribuer à sa définition, le cas échéant.

Il est maintenant partialement fait référence aux ouvrages *"Malterie et Brasserie"* et "*La Fabrication de la Bière"* cités plus haut pour acquérir au besoin une connaissance générale sur le maltage et sur les installations de malterie.

Comme mentionné en introduction le maltage est réalisé en malterie et fait appel à des techniques complexes afin de proprement reproduire les conditions naturelles de germination d'une céréale choisie. Ces techniques sont maintenant brièvement décrites.

La suite de la présente description est faite en référence à l'orge en tant que céréale.

Abstraction faite des tâches d'intendance comme le stockage des grains d'orge, le processus de maltage comprend au moins les opérations suivantes:
a) Un trempage des grains d'orge. Celui-ci peut se faire dans différentes sortes de cuves de trempage, appelées génériquement outils de trempage.
b) La germination, qui s'effectue dans des germoirs susceptibles de plusieurs modes de réalisation, notamment en raison de leur forme, qui peut être circulaire, ou au contraire semblable à un rectangle allongé. Après cette opération l'orge est qualifiée de malt vert.
c) Le touraillage, qui est presque toujours fait dans un appareil de forme circulaire, car il s'agit de faire sécher l'orge sur une grille en le faisant traverser par de l'air chaud, tout en l'agitant avec un bras radial. Après cette opération l'orge est qualifiée de malt.
d) Le dégermage, qui consiste à éliminer les radicelles de l'orge.

On donnera maintenant quelques indications générales typiques sur ces différentes opérations. Les grains de céréale sont tout d'abord soigneusement nettoyés par exemple par une opération initiale dite d'épierrage qui consiste principalement à éliminer des corps étranger tels que des pierres ou du sable.

Le but essentiel du trempage est de porter le grain à une teneur en eau proche de 50 %. L'humidité des grains passe ainsi d'environ 12 à 14 % à environ 42 à 45 %. Pour cela cette opération comprend des périodes pendant lesquelles le grain est noyé sous-eau par exemple dans une cuve. Il faut prévoir de 24 à 96 heures pour humidifier le grain jusqu'à obtention d'une teneur en eau souhaité. La durée dépend directement de la variété de céréale.

Il est important que le trempage ne soit ni trop court (*soustrempage*) ni trop long (*surtrempage*). En effet, le *soustrempage* et le *surtrempage* agissent directement sur la qualité du malt et ainsi sur les produits finaux issus de ce malt. Par exemple, la qualité d'un malt influence directement le pouvoir moussant des bières fabriquées à partir de ce malt. Par conséquent, il existe une grande demande d'optimisation du temps de trempage en vue d'un malt de bonne qualité. Classiquement, le trempage peut être continu, c'est-à-dire sans apport d'air pendant le mouillage. L'apport d'oxygène se fait par exposition du grain à l'air environnant à savoir en vidangeant et remplissant la cuve toutes les 12h par exemple. Ce processus est long.
Le trempage peut également être alterné (ou discontinu), avec des alternances de période pendant lesquelles le grain est sous l'eau avec un apport artificiel d'air pour assurer l'alimentation du grain en oxygène, et d'autres où le grain est à découvert. Ce processus est plus rapide que le trempage continu mais reste toutefois d'une durée d'environ 60 à 90h.

La température de l'eau est typiquement de 12 à 15°C, voir 20°C avec alternance d'eau froide. Le maximum de température se situe autour de 35°C, où le grain risque de mourir. Différents additifs peuvent être prévus pour empêcher la fermentation et le développement de micro-organismes pendant le trempage.
Les outils de trempage de l'état de la technique ne sont pas satisfaisant dans l'ensemble des points cités ci-dessus (pris indépendamment ou en combinaison). De plus, dans les outils de trempage de l'état de la technique réalisés sous forme de cuve il apparaît des zones d'agglomération de céréale ce qui défavorise un traitement uniforme des grains de céréale (*surtrempage* partiel, manque d'oxygène partiel etc.).
Notamment, les cuves classiques comprenant une partie supérieure cylindrique et une partie inférieure conique présentent des zones d'agglomération de céréale au niveau de l'angle formé par la connexion des deux parties.

La germination est réalisée dans un germoir. Un germoir comprend habituellement un lit de grain placé sur une grille fine. Le germoir est traversé par un flux d'air de température, de pression et humidité contrôlées. Durant la germination le grain commence à germer et par conséquent à synthétiser des enzymes tels que l'amylase. La germination dure généralement de 4 à 6 jours environ selon la céréale utilisée.

L'opération suivante, le touraillage, s'effectue également sur une grille sur laquelle les grains sont placés. Lors de cette opération il s'agit de sécher le grain pour ainsi stopper la germination, tout en gardant le mieux possible les propriétés désirées du malt. Comme son nom l'indique, le touraillage s'effectue en principe sur une plate-forme circulaire mise d'une grille traversée par de l'air chaud, également sous pression et humidité contrôlées. Un bras de niveau réglable verticalement peut être muni de vis sans fin plongeant dans le lit de grains, afin de tendre à l'homogénéiser verticalement ou d'une vis d'axe horizontal pour l'égalisation, le chargement et le déchargement, ou encore de pales fixes ou réglables. La vitesse de rotation de la ou des vis sans fin et le sens et la vitesse angulaire d'avancée du bras sont également contrôlées. Le temps de séjour des grains est également contrôlé.

L'opération de dégermage vise la séparation des radicelles de l'orge.

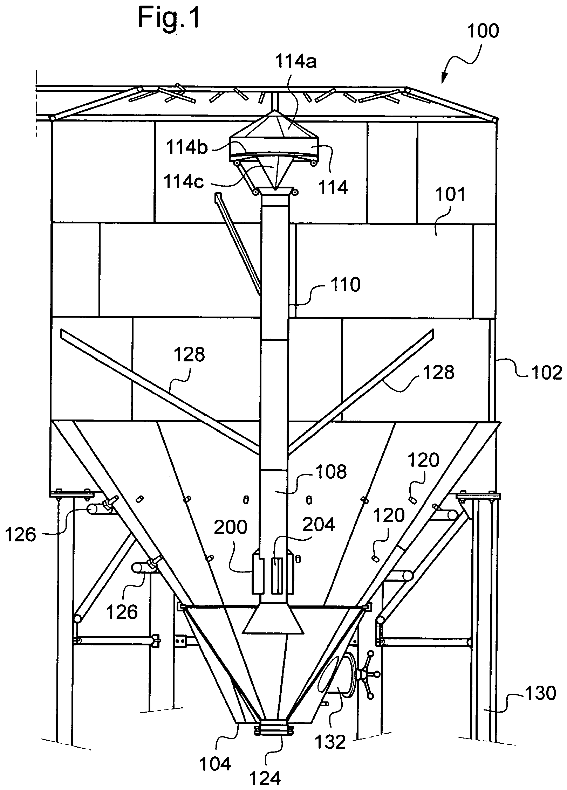

La figure 1 est une vue frontale d'une coupe longitudinale de l'installation de trempage selon un mode de réalisation de l'invention.

L'installation de trempage 100 comprend une paroi latérale 102 et un fond 104 formant une cuve 101. La cuve 101 peut contenir une suspension du type céréale/eau en vue de réaliser un processus de trempage. L'installation de trempage 100 comprend également un tube vertical 108 disposé à l'intérieur de la cuve 101. Le tube 108 est, de préférence, situé sensiblement au centre de ladite cuve 101, c'est-à-dire que l'axe central longitudinal du tube 108 et de la cuve 101 sont sensiblement confondus. Il sera dans la suite fait référence à un unique axe commun central longitudinal I pour le tube 108 et/ou la cuve 101.

Le tube 108 est formé par une paroi annulaire 110 et comporte une extrémité inférieure ouverte et une extrémité supérieure ouverte.

En état de fonctionnement, la cuve 101 contient une suspension 106 dont le niveau supérieur se situe en dessous de l'extrémité supérieure ouverte du tube 108. La suspension 106 peut alors accéder à l'intérieur du tube via l'extrémité inférieure. L'accessibilité de la suspension 106 au tube 108 doit être garantie pour un bon fonctionnement de l'installation.

Le tube 108 reçoit un fluide gazeux au moyen d'un injecteur de fluide gazeux 112. L'injecteur 112 est relié fluidiquement avec l'intérieur du tube 108. Selon l'invention, l'injecteur 112 collabore directement avec l'extrémité inférieure ouverte du tube 108.

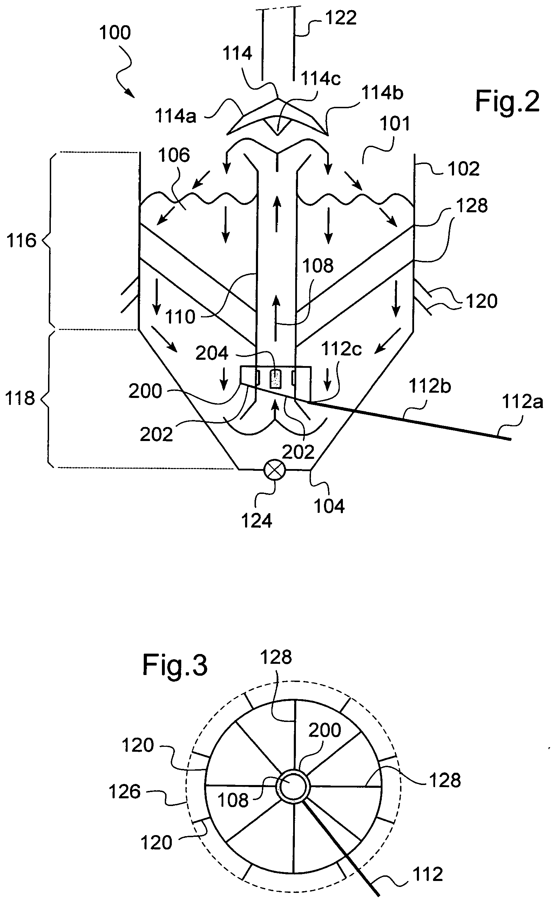

La figure 2 représente une vue frontale schématique partielle d'une coupe longitudinale de l'installation de trempage sur laquelle l'injecteur 112 est agencé au voisinage de l'extrémité inférieure ouverte du tube 108. Lorsque l'installation est en état de fonctionnement, ceci favorise l'entraînement d'une circulation contrôlée à l'intérieur du tube 108 allant de l'extrémité inférieure ouverte vers l'extrémité supérieure ouverte.

L'injecteur 112 est généralement réalisé au moyen d'un tube rigide en acier inoxydable ou autre matériau adapté.

Selon le mode de réalisation décrit ici, l'injecteur de fluide gazeux 112 comporte une partie amont 112a située sur un côté extérieur à la cuve 101. Cette partie amont 112a est reliée à une source de fluide gazeux tel qu'un générateur mécanique par exemple. Plus précisément, l'injecteur de fluide gazeux comprend un tube d'aération comprimée, le tube d'aération comprimée étant relié en amont à une source de gaz sous pression.
L'injecteur de fluide gazeux 112 comprend une partie centrale 112b laquelle traverse la paroi latérale 102 de l'installation de trempage 100 et s'étendant jusqu'une partie terminale 112c en communication fluidique avec l'intérieur du tube 108.

La partie terminale 112c de l'injecteur débouche dans une chambre étanche formée par une chemise dynamique 200. En conséquence, l'injecteur 112 est relié fluidiquement au tube 108 via la chemise dynamique 200. Le fluide gazeux apporté par l'injecteur 112 se répartie sensiblement régulièrement dans la chambre étanche formée par la chemise dynamique 200, avant d'accéder à l'intérieur du tube.

La demanderesse à découverte non sans surprise qu'une chambre étanche formée par une chemise dynamique située dans une partie inférieure d'un tube vertical d'un outil de trempage, permet de résoudre de nombreux problèmes rencontrés dans l'état de la technique.

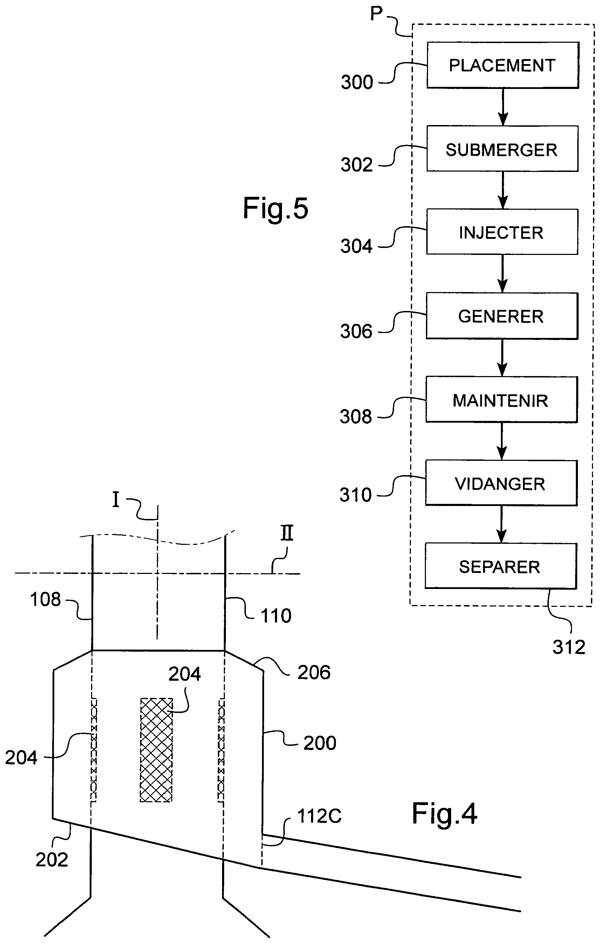

La figure 4 représente une vue frontale schématique détaillée de la chemise dynamique 200. La partie terminale 112c de l'injecteur débouche dans une paroi de ladite chemise dynamique 200. La chemise dynamique 200 entoure le tube 108 de manière étanche. L'étanchéité peut être réalisée au moyen de joints conformés autour du tube 108 en liaison avec la chemise. La chemise 200 peut également être étanchement conformée autour du tube 108 par liaison directe de pièces (soudage notamment).

Préférentiellement, la chemise dynamique est réalisée en forme cylindrique dont la base 202 comprend un plan incliné. Le plan incliné peut être d'environ 10° à environ 45° (généralement pas inférieur à 30°) par rapport au plan transversal du tube. Par plan transversal du tube on entend ici un plan selon l'axe transversal II. L'axe transversal II du tube est disposé à 90° par rapport l'axe longitudinal I du tube. Le plan incliné permet d'éliminer une éventuelle accumulation de céréale à l'intérieur de la chemise.

La figure 4 montre également une partie supérieure de la chemise dynamique 200 laquelle peut être réalisé en forme de toiture 206. Cela évite notamment une accumulation de céréale sur la partie supérieure de la chemise 200.

Selon le mode de réalisation décrit l'axe central longitudinal de la chemise 200 est sensiblement confondu avec l'axe central longitudinal du tube 108 et/ou l'axe central longitudinal de la cuve 101, à savoir l'axe I.

La chemise 200 entoure le tube 108 au voisinage de l'extrémité inférieure. La disposition dans la partie inférieure du tube 108 permet une bonne répartition du flux injecté et ainsi la génération d'un flux contrôlée régulier.

Selon un mode de réalisation, la chemise dynamique permet la génération d'un tuyau d'air agencé tout au long de la paroi annulaire et à l'intérieur de celle-ci du tube 108. À l'intérieur de ce tuyau d'air est disposé le mélange céréale/eau.

La paroi annulaire 110 du tube 108 se trouvant entourée par la chemise dynamique 200 comprend une ou plusieurs fenêtres 204 (ouvertures) pour donner accès au fluide gazeux régulièrement réparti dans chambre étanche. Pour une alimentation régulière en air comprimé du tube 108, chaque fenêtre 204 est disposée de manière angulairement égale sur la circonférence de la paroi annulaire 110. En d'autres termes chaque fenêtre 204 est disposée circonférentiellement régulièrement sur la paroi annulaire 110.

Avantageusement, chaque fenêtre 204 comprend une grille afin d'éviter le passage de céréale à l'intérieur de la chambre étanche. La céréale étant composé de grains, un maillage suffisamment fin pour empêcher le passage desdits grains est adapté. Notamment, le maillage peut être d'environ 2mm x 2mm. Selon un mode de réalisation le maillage peut être triangulaire et suffisamment fin pour retenir les grains de longeur d'environ 1,8mm. Bien évidemment pour une céréale composée de grains dont la taille est inférieure à 2mm ou 1,8mm, on pourra prévoir un maillage encore plus fin.

On peut également prévoir des fenêtres 204 formés par une multitude d'alésages, chaque alésage possédant avantageusement un diamètre ne permettant pas le passage de céréale.

L'agencement choisi de l'invention, et tout particulièrement la collaboration directe de l'injecteur 112 avec l'intérieur du tube 108 via la chemise dynamique 200 permet de générer une circulation contrôlée et régulière à l'intérieur de la cuve 101.

En état de fonctionnement, la communication fluidique entre l'injecteur 112 et l'intérieur du tube 108 permet tout d'abord, par l'injection de fluide gazeux, une première circulation contrôlée régulière de la suspension 106 se trouvant à l'intérieur du tube 108. Selon le mode de réalisation décrit ici, à l'intérieur du tube 108 le flux contrôlé est orienté dans une direction allant de l'extrémité inférieure ouverte du tube 108 vers l'extrémité supérieure ouverte du tube 108. Ceci est représenté par des flèches sur la figure 2.

On notera que le générateur mécanique permet au moins en partie de piloter ledit flux. Ce pilotage se fait généralement par régulation et/ou contrôle continu du débit d'injection de fluide gazeux par le générateur. Toutefois, c'est essentiellement la structure d'ensemble de l'installation de trempage 100 qui contribue à la régulation de la circulation de la suspension 106.

La circulation contrôlée à l'intérieur du tube 108 entraîne une circulation à l'intérieur de la cuve 101, contrôlée d'une part par le débit d'injection de fluide gazeux et d'autre part par la structure d'ensemble de l'installation 100.

En d'autres termes, la circulation contrôlé de l'intérieur du tube 108 s'étend jusqu'à l'intérieur de la cuve 101.

À l'intérieur de la cuve 101 et du coté extérieur au tube 108, le flux est orienté dans une direction allant du coté supérieur de la cuve 101 vers le fond 104 de celle-ci, à savoir une orientation généralement inverse vis-à-vis de celle régnant à l'intérieur du tube 108. De cette manière il est notamment assuré un bon mélange de la suspension céréale/eau 106.

Il apparaît généralement une circulation selon une symétrie de révolution (représenté par des flèches sur la figure 2). La symétrie de révolution de dans l'installation 100 est générée par l'agencement et la collaboration des éléments de l'installation. Tout particulièrement la chemise dynamique 200 contribue fortement à l'établissement de la circulation contrôlée et régulière selon une symétrie de révolution.

Comme le montre la figure 2, la cuve 101 peut comprendre une partie supérieure sensiblement cylindrique 116 et une partie inférieure sensiblement tronconique 118. La symétrie de révolution générée à l'intérieur de l'installation 100 au moyen des différents éléments (chemise dynamique notamment) défavorise fortement l'agglomération de céréale à l'intérieur de la cuve.

Avantageusement, la cuve est conformée de manière à avoir un angle de la partie inférieure sensiblement tronconique 118 sensiblement à 90° vis-à-vis de la partie inférieure convergente du tube 108.

Selon un mode de réalisation, au moins un stabilisateur 128 est fixé à la paroi latérale 102 de la cuve 101 et à la paroi annulaire 110 du tube 108. Chaque stabilisateur assure une stabilisation mécanique du tube 108. Préférentiellement, chaque stabilisateur 128 est circonférentiellement régulièrement réparti sur la paroi 110 du tube 108. Les stabilisateurs sont avantageusement soudés par un soudage à platine.

La figure 3 représente une vue schématique partielle de dessus de l'installation de trempage 100 sur laquelle sont représentés notamment des stabilisateurs 128.

De préférence, au moins deux stabilisateurs 128 sont fixés sur un même plan transversal du tube 108. Dans ce cas, la distance angulaire de séparation entre chaque stabilisateur 128 est préférentiellement sensiblement équidistante. En d'autres termes, lorsque plusieurs stabilisateurs 128 sont fixés sur la paroi annulaire 110 sur un même plan transversal du tube 108, lesdits stabilisateurs 128 sont montés selon une disposition angulairement égale. L'ensemble des stabilisateurs 128 fixés sur un même plan transversal du tube 108 forme alors une couronne de stabilisation dit étage de stabilisation.

Pour permettre une bonne stabilisation du tube 108, il est avantageux de prévoir plusieurs étages de stabilisation disposés sur des cônes géométriques (plans transversaux distincts) du tube 108. Les étages de stabilisation sont donc espacés axialement sur le tube 108. Le pilotage peut ainsi se faire de manière plus précise.

La fixation du tube 108 par les stabilisateurs 128 est importante lorsqu'un flux de débit important est entraîné à l'intérieur de celui-ci. De plus, la fixation permet d'orienter le tube 108 selon les besoin visés. En effet, il est fait référence ici à un tube 108 vertical pour un flux apte à générer une circulation selon une symétrie de révolution. Un flux d'orientation différente que celle décrite ici peut être prévu et piloté en vue de générer une circulation autre que celle décrite plus haut. À cet effet, selon la circulation de la suspension que l'on veut générer, il suffit généralement une adaptation du positionnement du tube 108 dans l'installation de l'invention.

L'injecteur de fluide gazeux 112 peut être un tube avec section transversale circulaire, rectangulaire ou encore triangulaire. Préférentiellement, l'injecteur 112 est sensiblement droit et légèrement incliné par rapport à un axe transversal de la cuve 101. L'injecteur est réalisé en un matériau renforcé pour supporter et/ou maintenir le tube 108.

L'installation de trempage 100 (figure 1 et 2) comprend avantageusement un chapeau (ou plafond) de retenue 114 formant déflecteur, placé au-dessus de l'extrémité supérieure ouverte du tube 108. En effet, le mélange céréale/eau 106 entraîné à l'intérieur du tube 108 par le flux contrôlé est éjecté par l'extrémité supérieure ouverte dudit tube 108. Le chapeau de retenue 114 permet de rediriger de manière contrôlée le mélange céréale/eau 106 vers la cuve 101 et ainsi de maintenir un flux régulier et contrôlé dans l'ensemble de la cuve 101. Ceci est représenté par les flèches sur la figure 2 et favorise la circulation fluidique selon la symétrie de révolution mentionnée plus haut.

Le chapeau de retenue 114 à une forme générale en parapluie. Par forme générale en parapluie on entend une forme comprenant une partie inférieure concave 114b et une partie supérieure conique 114a. Selon un mode de réalisation de l'invention la partie inférieur concave 114b comprend un élément conique 114c, dont la base est disposée sensiblement au centre de la partie inférieure concave 114b et dont la pointe est agencée sensiblement sur l'axe central I du tube vertical 108.

Il est fait référence ici à un élément conique 114c, toutefois l'élément 114c peut également avoir un aspect général en pyramide ou d'entonnoir dont les bases seraient disposées sensiblement au centre de la partie inférieure concave 114b. L'élément conique 114c aide à la redirection de la suspension céréale/eau vers la cuve.

En effet, selon la conception générale du chapeau 114 et des formes choisies des éléments le constituant (114a, 114b et 114c), la circulation contrôlée peut être guidé dans une direction prédéterminée. Pour cela, un angle de déflection choisi et formé au moins partiellement par ladite partie concave 114b du chapeau 114 dirige la circulation contrôlée vers la paroi latérale 102. Cette déflection génère dans la cuve 101 la circulation selon la symétrie de révolution par rapport à l'axe centrale I du tube vertical 108.

Le remplissage de la cuve 101 avec le mélange céréale/eau 106 peut se faire par une entrée 122 commune, ou encore par 2 entrées distinctes (non représentés) placée(s) au-dessus de ladite cuve 101. Le chapeau de retenue 114 est centré sur un même axe central longitudinal I avec le tube 108 et l'entrée 122. Plus précisément, le chapeau de retenue 114 est disposé entre l'entrée 122 et le tube 108. Ainsi, à coté de sa fonction de déflecteur, le chapeau 114 assure au moyen de sa partie supérieur conique 114a une répartition/distribution égalitaire du mélange céréale/eau 106 dans la cuve 101, lorsque celle-ci est remplie via l'entrée 122.

L'évacuation, au choix de l'eau et/ou de céréale peut se faire par une sortie 124 généralement située au fond 104 de la cuve 101. Avantageusement, la sortie 124 peut comprendre un filtre amovible. Ceci permet faire distinction entre chacune des deux composantes formant le mélange eau/céréale. En effet, un filtre amovible permet dans un premier temps d'évacuer l'eau tout en conservant la céréale à l'intérieur de la cuve (le filtre étant monté au fond de la cuve), puis dans un deuxième temps d'évacuer la céréale de la cuve (le filtre étant démonté du fond de la cuve). La récolte directe de la céréale humidifiée permet notamment un gain de temps lors du processus de maltage. En effet, la céréale humidifiée peut ainsi être directement après trempage être conduite vers un convoyeur (tapis roulant par exemple) lequel emmène la céréale vers la chambre de germination.

On peut également prévoir des sorties distinctes pour l'eau et pour la céréale.

Les figures 1 et 3 montrent que la cuve 101 peut être entourée par au moins un anneau d'aération 126 en vue d'une alimentation en oxygène du mélange céréale/eau. La cuve 101 est alors munie d'ouvertures (alésages) d'aération de gaz pour recevoir des tubulures d'aération 120 lesquelles permettent une alimentation supplémentaire en oxygène. L'alimentation en oxygène assure un apport artificiel d'air et ainsi d'alimenter le grain en oxygène. L'anneau d'aération 126 est représenté sur la figure 3 par un cercle en ligne discontinue. Généralement, une installation selon l'invention comprend plusieurs anneaux d'aération 126 décalés axialement par rapport à l'axe centrale de la cuve 101, ce qui permet une alimentation en oxygène régulière du mélange céréale/eau. La figure 1 montre deux anneaux d'aération 126 distincts.

L'ensemble de l'installation de trempage est préférentiellement réalisé en un matériau d'alliage métallique avec des caractéristiques physico-chimiques adapté au maltage. Ces caractéristiques comprennent notamment la stabilité (résistance aux déformations et/ou corrosions) vis-à-vis de l'environnement et des changements de température, ou encore l'asepsie vis-à-vis de microorganismes. On utilise par exemple un matériau de type acier inoxydable (alliages de fer et de carbone auquel on vient ajouter du chrome et d'autres éléments comme notamment du manganèse ou du nickel, molybdène ou vanadium).

La figure 1 montre que la cuve 101 peut être posée et fixée sur des jambes de support 130 et comprendre des moyens d'accès pour nettoyage manuel tel qu'un hublot 132.

L'invention vise également un procédé de trempage pour la production de malt. L'installation décrite ci-avant permet une mise en oeuvre idéale de ce procédé.

La figure 5 montre un organigramme du procédé P de l'invention.

Une première opération PLACER 300 comprend le placement d'une céréale dans une cuve 101. Dans une opération suivante SUBMERGER 302 on submerge la céréale placée dans la cuve 101 avec de l'eau pour former un mélange eau/céréale.

Les deux opérations 300 et 302 peuvent être réalisées sensiblement simultanément. Ceci est généralement le cas lorsque qu'il existe une entrée commune pour céréale et eau, tel que l'entrée 122. Toutefois, les opérations peuvent également être décalées temporellement. L'entrée 122 peut alors dans un premier temps alimenter la cuve en céréale puis, dans un deuxième temps, submerger la céréale contenue dans la cuve 101 avec de l'eau via l'entrée 122. En alternative et à l'inverse, dans un premier temps l'entrée 122 peut alimenter la cuve en eau puis, dans un deuxième temps la céréale est ajoutée dans la cuve 101 via l'entrée 122.

L'alimentation de la cuve en eau et en céréale peut naturellement être réalisée par des entrées distinctes.

Lors d'une opération INJECTER 304 suivante, un flux de fluide gazeux est injecté à l'intérieur de la cuve. Cette opération peut notamment être réalisée par l'injecteur de fluide 112 en combinaison avec la chemise dynamique 200. L'opération INJECTER 304 est suivie d'une opération GÉNÉRER 306 dans laquelle il est généré une circulation contrôlée du mélange eau/céréale au moyen du flux de fluide gazeux injecté avec l'opération INJECTER 304.

La circulation contrôlée peut suivre une symétrie de révolution par rapport à l'axe central longitudinal I de la cuve. La réalisation de la symétrie de révolution peut être réalisée avec une cuve 101 comprenant l'injecteurs de fluide 112 en combinaison avec la chemise dynamique 200, un tube 108 vertical sensiblement situé au centre de la cuve et un chapeau déflecteur 114 disposé au dessus du tube 108. La communication fluidique entre l'injecteurs de fluide 112 avec l'intérieur du tube 108 vertical via la chemise dynamique 200 permet de générer dans un premier temps un mouvement contrôlé du mélange céréale/eau à l'intérieur du tube allant du coté inférieur de la cuve 101 vers le coté supérieur de la cuve 101. Ce mouvement contrôlé s'étend jusqu'à l'intérieur de la cuve et créé ainsi ladite circulation contrôlée selon une symétrie de révolution. Ceci permet un mélange uniforme et l'élimination d'agglomération de céréale.

L'opération suivante MAINTENIR 308 comprend la circulation contrôlée du mélange eau/céréale pendant une durée prédéterminée. Ceci permet notamment l'atteinte de la céréale d'une teneur en eau adaptée pour la germination. La durée prédéterminée peut varie selon la variété de céréale.

La prochaine opération VIDANGER 310 comprend la vidange de la cuve 101. L'opération comprend l'évacuation du mélange eau/céréale issu de l'opération SUBMERGER 302. Cette évacuation est généralement réalisée par une sortie 124 de la cuve 101. Cette opération 310 est suivie d'une dernière opération SÉPARER 312 qui comprend la séparation des composantes formant le mélange eau/céréale, à savoir la céréale et l'eau.

Selon un mode de réalisation de l'invention, les opérations VIDANGER 310 et SÉPARER 312 peuvent être réalisés sensiblement simultanément. À cet effet, l'évacuation de l'opération VIDANGER 310 peut faire distinction entre chacune des deux composantes formant le mélange eau/céréale. Ainsi, la sortie 124 de la cuve 101 peut notamment être un filtre amovible. Un filtre amovible permet dans un premier temps d'évacuer l'eau tout en conservant la céréale à l'intérieur de la cuve (le filtre étant monté au fond de la cuve), puis dans un second temps d'évacuer la céréale de la cuve (le filtre étant démonté du fond de la cuve). La céréale peut alors être directement guidée vers un convoyeur pour être traité et/ou être soumise aux étapes suivantes d'un processus de maltage (étapes en aval du trempage avec notamment la germination).

Remarque étant faite que dans la présente description la terminologie flux et/ou circulation peut être sensiblement regardée comme synonyme. En effet, le flux de fluide gazeux dont il est question ici entraîne directement la circulation de la suspension eau/céréale. Leur cour fluidique est donc sensiblement identique (sauf exceptions : chambre étanche 200 ou injecteur 112 notamment qui idéalement ne comprennent pas de liquide)

## Revendications

1. Installation de trempage pour malterie comprenant une cuve (101) pour contenir une suspension céréale/eau (106) et un seul tube (108) disposé à l'intérieur de ladite cuve avec une extrémité inférieure et une extrémité supérieure toutes deux en communication avec la cuve, **caractérisé en ce que** l'installation comprend un injecteur (112) relié fluidiquement avec l'intérieur dudit tube (108), et collaborant avec l'extrémité inférieure dudit tube pour entraîner une circulation contrôlée de ladite suspension céréale/eau par injection d'un fluide gazeux, dans laquelle l'injecteur (112) comprend une partie terminale d'injection formée par une chemise dynamique (200) entourant ledit tube (108), et dans laquelle la chemise dynamique (200) entoure de manière étanche ledit tube (108) au voisinage de ladite extrémité inférieure, et **en ce que** au moins un stabilisateur (128) est fixé à une paroi latérale (102) de la cuve (101) et à une paroi annulaire (110) du tube (108).

2. Installation de trempage selon la revendication 1, dans laquelle l'injecteur (112) est agencé au voisinage de ladite extrémité inférieure du tube pour générer à l'intérieur du tube (108) une première circulation contrôlée selon une direction allant de l'extrémité inférieure vers l'extrémité supérieure dudit tube.

3. Installation de trempage selon l'une des revendications précédentes, dans laquelle le tube (108) est disposé sensiblement au centre de la cuve (101) et dans laquelle un chapeau (114) de retenue formant déflecteur est placé au dessus de ladite extrémité supérieure pour rediriger ladite circulation contrôlée vers ladite cuve (101).

4. Installation de trempage selon la revendication 3, dans laquelle ledit chapeau (114) de retenue comprend une forme générale en parapluie avec une partie inférieure concave (114b) et une partie supérieure conique (114a) et dans laquelle la partie inférieur concave (114b) comprend un élément conique (114c), dont la base est disposée sensiblement au centre de la partie inférieure concave (114b) et dont la pointe est agencée sensiblement sur l'axe central (I) dudit tube (108).

5. Installation de trempage selon la revendication 4, dans laquelle la cuve (108) comprend une paroi latérale (102) et un fond (104) et dans laquelle un angle de déflection formé au moins partiellement par ladite partie concave (114b) dudit chapeau (114) est agencé pour diriger ladite circulation contrôlée dans une direction prédéterminée vers la paroi latérale (102) générant ainsi dans la cuve (101) une circulation selon une symétrie de révolution par rapport à l'axe centrale (I) dudit tube (108).

6. Installation de trempage selon l'une des revendications précédentes, dans laquelle la chemise dynamique (200) est réalisée selon une forme cylindrique dont la base comprend un plan incliné d'environ 45° par rapport à un axe transversal (II) du tube.

7. Installation de trempage selon l'une des revendications précédentes, dans laquelle la chemise dynamique (200) et le tube (108) ont sensiblement le même axe central longitudinal (I) .

8. Installation de trempage selon l'une des revendications précédentes, dans laquelle le tube (108) comprend au moins une fenêtre (204) dans sa paroi annulaire (110) au niveau de la partie de tube entourée par ladite chemise dynamique (200).

9. Installation de trempage selon la revendication 8, dans laquelle chaque fenêtre (204) est disposée circonférentiellement régulièrement sur ladite paroi annulaire (110) et dans laquelle chaque fenêtre (204) comprend une grille.

10. Procédé de trempage pour la production de malt dans une installation de trempage selon l'une des revendications 1 à 9, comprenant les étapes suivantes :
a. placer une céréale dans la cuve (101) de l'installation (300),
b. submerger ladite céréale par de l'eau pour former un mélange eau/céréale (302),
c. injecter un flux de fluide gazeux à l'intérieur de la cuve (304),
d. générer une circulation régulière et contrôlée du mélange eau/céréale au moyen du flux de fluide gazeux injecté à l'étape c. (306),
e. maintenir la circulation contrôlée du mélange eau/céréale pendant une durée prédéterminée (308),
f. vidanger la cuve du mélange eau/céréale issu de la submersion à l'étape b. (310), et
g. séparer le mélange eau/céréale pour récolter une céréale imbibée d'eau (312).

11. Procédé selon la revendication 10, dans lequel l'étape a. et l'étape b. sont réalisées sensiblement simultanément.

12. Procédé selon l'une des revendications 10 et 11, dans lequel l'étape f. et l'étape g sont réalisées sensiblement simultanément.

13. Procédé selon l'une des revendications 10 à 12, dans lequel la circulation contrôlée suit une symétrie de révolution par rapport à l'axe central longitudinal de la cuve.

## Patentansprüche

1. Weichvorrichtung für eine Mälzerei, umfassend ein Gefäß (101), um eine Getreide/Wasser-Suspension (106) zu enthalten, und ein einzelnes Rohr (108), das im Inneren des Gefäßes angeordnet ist, wobei ein unteres Ende und ein oberes Ende beide mit dem Gefäß in Kommunikation stehen, **dadurch gekennzeichnet, dass** die Vorrichtung einen fluidisch mit dem Inneren des Rohrs (108) verbundenen Injektor (112) umfasst, der mit dem unteren Ende des Rohrs zusammenwirkt, um eine gesteuerte Zirkulation der Getreide/Wasser-Suspension durch Injektion eines gasförmigen Fluids zu bewirken, wobei der Injektor (112) einen Endinjektionsteil umfasst, der von einer dynamischen Ummantelung (200) gebildet wird, die das Rohr (108) umgibt, und wobei die dynamische Ummantelung (200) dicht das Rohr (108) in der Nähe des unteren Endes umgibt, und dadurch, dass mindestens ein Stabilisator (128) an einer Seitenwand (102) des Gefäßes (101) und an einer ringförmigen Wand (110) des Rohrs (108) befestigt ist.

2. Weichvorrichtung nach Anspruch 1, wobei der Injektor (112) in der Nähe des unteren Endes des Rohrs eingerichtet ist, um im Inneren des Rohrs (108) eine erste gesteuerte Zirkulation in einer Richtung zu erzeugen, die von dem unteren Ende zu dem oberen Ende des Rohrs verläuft.

3. Weichvorrichtung nach einem der vorhergehenden Ansprüche, wobei das Rohr (108) im Wesentlichen im Zentrum des Gefäßes (101) angeordnet ist, und wobei ein Rückhaltehut (114), der einen Ablenker bildet, über das obere Ende platziert ist, um die gesteuerte Zirkulation zu dem Gefäß (101) umzuleiten.

4. Weichvorrichtung nach Anspruch 3, wobei der Rückhaltehut (114) eine allgemeine Form eines Schirms mit einem unteren konkaven Teil (114b) und einem oberen konischen Teil (114a) umfasst, und wobei der untere konkave Teil (114b) ein konisches Element (114c) umfasst, dessen Basis im Wesentlichen im Zentrum des unteren konkaven Teils (114b) angeordnet ist, und dessen Spitze im Wesentlichen auf der zentralen Achse (I) des Rohrs (108) eingerichtet ist.

5. Weichvorrichtung nach Anspruch 4, wobei das Gefäß (108) eine Seitenwand (102) und einen Boden (104) umfasst, und wobei ein Ablenkwinkel, der mindestens teilweise von dem konkaven Teil (114b) des Huts (114) gebildet wird, eingerichtet ist, die gesteuerte Zirkulation in eine vorherbestimmte Richtung zu der Seitenwand (102) zu leiten, wodurch in dem Gefäß (101) eine Zirkulation rotationssymmetrisch in Bezug auf die zentrale Achse (I) des Rohrs (108) erzeugt wird.

6. Weichvorrichtung nach einem der vorhergehenden Ansprüche, wobei die dynamische Ummantelung (200) in einer zylindrischen Form ausgeführt ist, deren Basis eine Ebene umfasst, die um ungefähr 45° in Bezug auf eine Querachse (II) des Rohrs geneigt ist.

7. Weichvorrichtung nach einem der vorhergehenden Ansprüche, wobei die dynamische Ummantelung (200) und das Rohr (108) im Wesentlichen dieselbe zentrale Längsachse (I) aufweisen.

8. Weichvorrichtung nach einem der vorhergehenden Ansprüche, wobei das Rohr (108) mindestens ein Fenster (204) in seiner ringförmigen Wand (110) auf der Höhe des Teils des Rohrs umfasst, der von der dynamischen Ummantelung (200) umgeben ist.

9. Weichvorrichtung nach Anspruch 8, wobei jedes Fenster (204) in Umfangsrichtung regelmäßig an der ringförmigen Wand (110) angeordnet ist, und wobei jedes Fenster (204) ein Gitter umfasst.

10. Weichverfahren zur Herstellung von Malz in einer Weichvorrichtung nach einem der Ansprüche 1 bis 9, umfassend die folgenden Schritte:
a. Platzieren von Getreide in das Gefäß (101) der Vorrichtung (300),
b. Eintauchen des Getreides in Wasser, um eine Wasser/Getreide-Mischung zu bilden (302),
c. Injizieren eines gasförmigen Fluidstroms in das Innere des Gefäßes (304),
d. Erzeugen einer regelmäßigen und gesteuerten Zirkulation der Wasser/Getreide-Mischung mit dem in Schritt c. injizierten gasförmigen Fluidstrom (306),
e. Aufrechterhalten der gesteuerten Zirkulation der Wasser/Getreide-Mischung während einer vorherbestimmten Dauer (308),
f. Entleeren des Gefäßes der Wasser/Getreide-Mischung, die von dem Eintauchen in Schritt b. stammt (310), und
g. Trennen der Wasser/Getreide-Mischung, um ein mit Wasser getränktes Getreide zu erhalten (312).

11. Verfahren nach Anspruch 10, wobei Schritt a. und Schritt b. im Wesentlichen gleichzeitig durchgeführt werden.

12. Verfahren nach einem der Ansprüche 10 und 11, wobei Schritt f. und Schritt g. im Wesentlichen gleichzeitig durchgeführt werden.

13. Verfahren nach einem der Ansprüche 10 bis 12, wobei die gesteuerte Zirkulation einer Rotationssymmetrie in Bezug auf die zentrale Längsachse des Gefäßes folgt.

## Claims

1. Steeping device for malting, comprising a vessel (101) for containing a cereal/water suspension (106) and a single tube (108) which is arranged inside said vessel and has a lower end and an upper end that are both in communication with the vessel, **characterised in that** the device comprises an injector (112) which is fluidically connected to the inside of said tube (108) and cooperates with the lower end of said tube in order to bring about a controlled flow of said cereal/water suspension by injecting a gaseous fluid, the injector (112) comprising an end injection portion formed by a dynamic jacket (200) that surrounds said tube (108), and the dynamic jacket (200) sealingly surrounding said tube (108) in the vicinity of said lower end, and **in that** at least one stabiliser (128) is attached to a side wall (102) of the vessel (101) and to an annular wall (110) of the tube (108).

2. Steeping device according to claim 1, wherein the injector (112) is arranged in the vicinity of said lower end of the tube in order to generate, inside the tube (108), a first controlled flow in a direction going from the lower end towards the upper end of said tube.

3. Steeping device according to any of the preceding claims, wherein the tube (108) is arranged substantially at the centre of the vessel (101) and wherein a retaining cap (114) forming a deflector is placed above said upper end in order to redirect said controlled flow towards the vessel (101).

4. Steeping device according to claim 3, wherein said retaining cap (114) is generally umbrella-shaped, having a concave lower portion (114b) and a conical upper portion (114a), and wherein the concave lower portion (114b) comprises a conical element (114c), the base of which is arranged substantially at the centre of the lower concave portion (114b) and the tip of which is arranged substantially on the central axis (I) of said tube (108).

5. Steeping device according to claim 4, wherein the vessel (108) comprises a side wall (102) and a bottom (104) and wherein a deflection angle formed at least in part by said concave portion (114b) of said cap (114) is arranged to direct said controlled flow in a predetermined direction towards the side wall (102), thus generating in the vessel (101) a flow according to a rotational symmetry with respect to the central axis (I) of said tube (108).

6. Steeping device according to any of the preceding claims, wherein the dynamic jacket (200) has a cylindrical shape, the base of which has a plane that is inclined by approximately 45° with respect to a transverse axis (II) of the tube.

7. Steeping device according to any of the preceding claims, wherein the dynamic jacket (200) and the tube (108) have substantially the same central longitudinal axis (I).

8. Steeping device according to any of the preceding claims, wherein the tube (108) comprises at least one window (204) in the annular wall (110) thereof in the region of the tube portion surrounded by said dynamic jacket (200).

9. Steeping device according to claim 8, wherein each window (204) is arranged evenly over the circumference of said annular wall (110) and wherein each window (204) comprises a grate.

10. Steeping method for producing malt in a steeping device according to any of claims 1 to 9, comprising the following steps:
a. placing a cereal in the vessel (101) of the device (300);
b. submerging said cereal in water in order to form a water/cereal mixture (302);
c. injecting a flow of gaseous fluid inside the vessel (304);
d. generating a consistent and controlled flow of the water/cereal mixture by means of the flow of gaseous fluid injected in step c. (306);
e. maintaining the controlled flow of the water/cereal mixture for a predetermined duration (308);
f. draining the vessel of the water/cereal mixture resulting from the submersion in step b. (310); and
g. separating the water/cereal mixture in order to collect a water-soaked cereal (312).

11. Method according to claim 10, wherein step a. and step b. are carried out substantially simultaneously.

12. Method according to any of claims 10 and 11, wherein step f. and step g. are carried out substantially simultaneously.

13. Method according to any of claims 10 to 12, wherein the controlled flow follows a rotational symmetry with respect to the central longitudinal axis of the vessel.
